Europäisches Patentamt

European Patent Office

Office européen des brevets

(11) Veröffentlichungsnummer: **0 226 662**
**A1**

(12) # EUROPÄISCHE PATENTANMELDUNG

(21) Anmeldenummer: **85116627.2**

(22) Anmeldetag: **27.12.85**

(51) Int. Cl.⁴: **A 01 K 47/02**

(30) Priorität: **04.11.85 ES 290048 U**

(43) Veröffentlichungstag der Anmeldung:
**01.07.87 Patentblatt 87/27**

(84) Benannte Vertragsstaaten:
**AT BE CH DE FR GB IT LI LU NL SE**

(71) Anmelder: **Keysselitz, Alexander**
**Seeleitn 65**
**D-8193 Ambach(DE)**

(72) Erfinder: **Keysselitz, Alexander**
**Seeleitn 65**
**D-8193 Ambach(DE)**

(54) **Drahtbefestigung in den Wabenrähmchen der Bienenbeuten.**

(57) In zwei gegenüberliegenden Leisten der rechteckigen Wabenrähmchen der Bienenbeuten werden 2,5 Millimeter breite Rillen lotrecht eigesägt, mit einer Tiefe der halben Breite der jeweiligen Leiste.

Der Draht der zur Befestigung der industriell vorgefertigten Mittelwand aus Bienenwachs dient, wird von oben in diese Rillen eingelegt. Wird der Draht gespannt, ist dieser fest im Rähmchen fixiert.

Das Einlegen des Drahtes in Rillen ist wesentlich schneller, als das durchfädeln des Drahtes durch die Löcher in den herkömmlichen Wabenrähmchen.

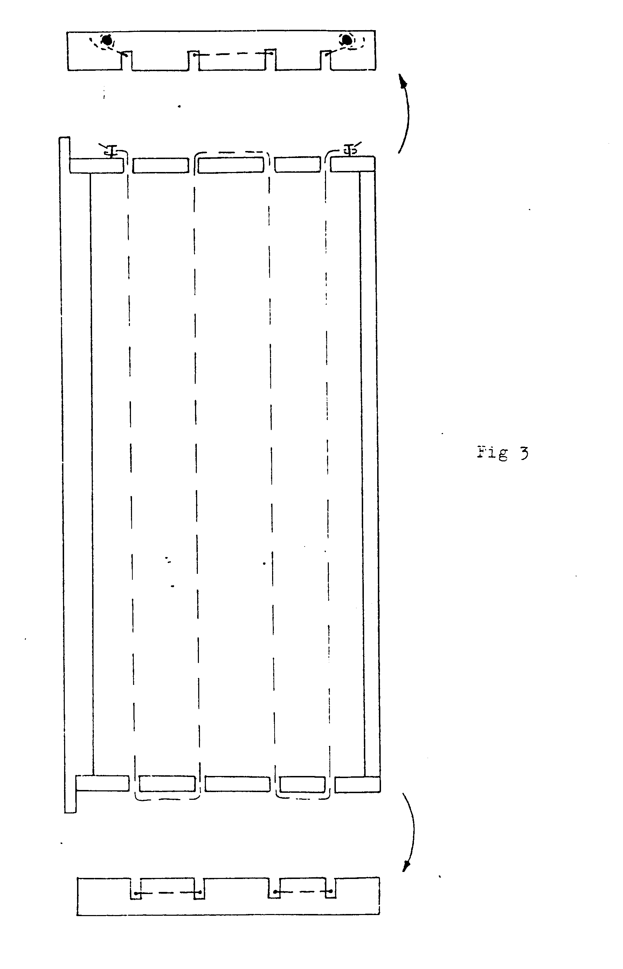

Zur Veröffentlichung wird Abbildung *Fig 3* vorgeschlagen.

Fig 3

Croydon Printing Company Ltd.

EP 0 226 662 A1

0226662

## Vorrichtung aus Rillen zum Befestigen des Drahtes in den Wabenrähmchen der Bienenbeuten

Die in der Imkerei üblichste Art die künstliche Mittelwand aus Bienenwachs in den Wabenrähmchen der Bienenbeuten zu befestigen, ist das Auflöten des Wachses auf einen, innerhalb des Rähmchens, straff gespannten Drahtes. Auf diese Weise wird das eingesetzt Wachs fest mit den Rähmchen verbunden und das Wachs wird durch Feuchtigkeit und Temperaturschwankungen nicht verbogen und gewölbt.

In den heutzutage gewöhnlich verwendeten Rähmchen, wird der Draht durch Löcher geführt, die in zwei gegenüberliegenden Leisten des Rähmchens eingebohrt sind.

Den nahezu zwei Meter langen Draht durch die Löcher zu ziehen und straff zu spannnen, nimmt viel Zeit in Anspruch, ungefähr 1 Minute und 15 Sekunden für jedes einzelne Rähmchen.

### Die Erfindung

Die in dieser Eingabe vorgestellte Erfindung besteht darin, die gebohrten Löcher in den Rähmchen durch gesägte Rillen zu ersetzen.

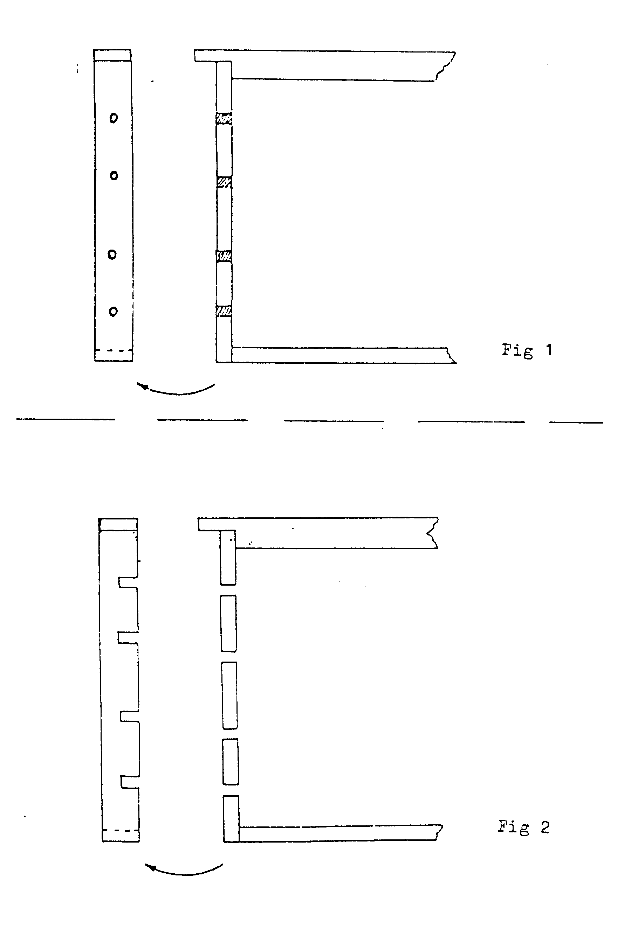

(siehe hierzu Fig 1 : herkömmliches Rähmchen mit Löchern

Fig 2 : Rähmchen mit Rillen

Fig 3 : Rähmchen mit Rillen und eingelegtem Draht

Legende:

—— —— —— = Draht

● und ⊤ = kleine Nägel zum anbinden des Drahts )


## Vorteile der Erfindung

Obwohl das Ersetzen der Löcher durch Rillen simpel erscheint, ist der Vorteil groß.


-- Man kann den Draht unkompliziert von oben in die Rillen einlegen, und verliert damit keine Zeit, den Draht durch engen Löcher zu fädeln.


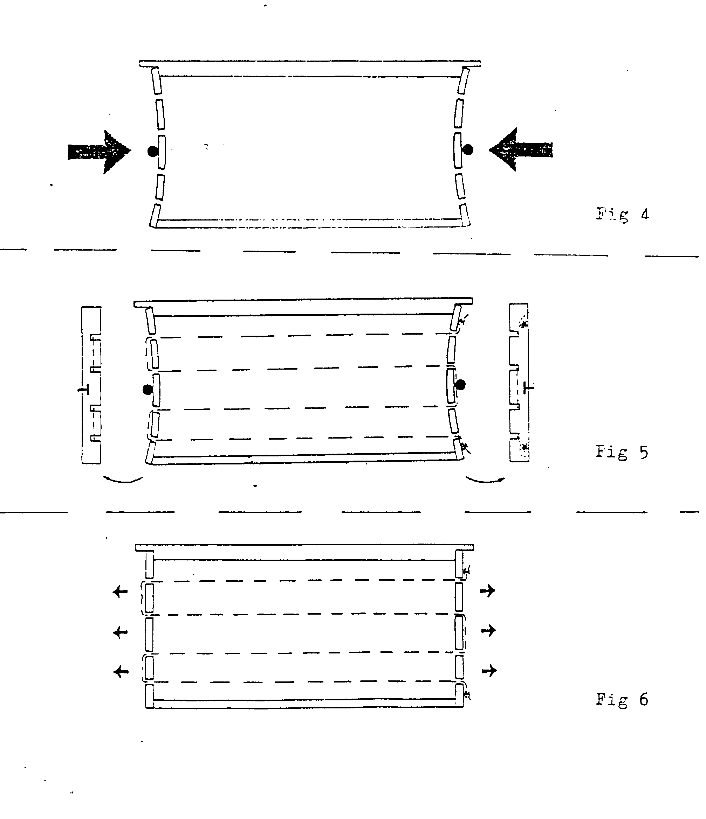

-- Wenn man das Rähmchen zum Einlegen des Drahtes zwischen zwei starke Nägel einklemmt, kann man das Einlegen und das Spannen des Drahtes in einem Arbeitsgang erledigen (siehe Fig 4 bis 6 : durch das Einklemmen werden die gerillten Leisten des Rähmchens nach innen gebogen. Wird das Rähmchen nach Einlegen des Drahtes aus der Einklemmung befreit, geben die sich nun wieder geradebiegenden Leisten ihre Spannung an den Draht weiter, das heißt, der Draht wird innerhalb des Rähmchens gespannt). Mit ein wenig Übung, läßt sich so das Einlegen und Spannen des Drahtes in nicht mehr als 15 Sekunden erledigen, das ist fünf mal schneller als die herkömmliche Art des Einlegens und Spannens in den gelochten Rähmchen.

-- Die Herstellung des Rähmchens ist einfacher und schneller:

In die Rähmchen mit Löchern, muß jede zu lochende Leiste des Rähmchens einzeln für sich gebohrt werden, was eine sehr zeitraubende Arbeit darstellt. Die Rillen hingegen werden in sehr kurzer Zeit in die Leisten gesägt. Man verwendet hierzu eine Säge mit mehreren Sägescheiben und schiebt ein Brett, noch befor man es in Leisten geschnitten hat über diese Säge. Auf diese Weise können eine beliebige Anzahl von Rillen in ungfähr 30 bis 40 Leisten in einem Arbeitsgang gesägt werden. (Das in Fig 3 dargestellte Rähmchen würde mit 4 Sägescheiben gesägt werden.)

Anwendbarkeit

Das System aus Rillen zum Besfestigen des Drahtes in den Wabenrähmchen ist auf alle Rämchengrößen und -modelle anwendbar, besonders dann, wenn die Rähmchen aus Holz gefertigt werden.

0226662

## Breite, Tiefe und Neigung der Rillen

Die Rillen von ungefähr 2,5 Millimetern Breite sind im rechten Winkel in die Leisten gesägt. Die Tiefe der Rillen ist die Hälfte der Breite der Leiste.

Wenn die Rähmchen aus weichem Holz hergestellt werden (was der Normalfall ist), so drückt sich der Draht in das Holz ein und springt somit nicht aus der im rechten Winkel gesägten Rille.

Die Breite von 2,5 Millimetern ist notwendig, damit man den Draht so leicht wie möglich einlegen kann. In einer engeren Rille würde sich der Draht verhacken, und das Einlegen würde länger dauern.

## Kleine Nägel zum Festbinden des Drahtes

Zwei kleine Nägel sind am Rähmchen so angebracht, das man den Draht daran festbinden kann. Diese Nägel werden von dem Hersteller eingenagelt, oder vom Imker selbst, genauso wie dies bei den herkömmlichen Rähmchen heute üblich ist.

Patentanspruch

Vorrichtung aus Rillen zum Befestigen des Drahtes in den Wabenrähmchen der Bienenbeuten besteht aus mehreren Rillen, die lotrecht in zwei gegenüberliegenden Leisten des rechteckigen Wabenrähmchens gesägt werden, von einer Tiefe der halben Leistenbreite und eine Breite von ungefähr 2,5 Millimetern, in die man einen Draht einlegt, um diesen innerhalb des Rähmchens zu befestigen , um so dem Wachs halt zu geben, sobald der Draht gestrafft, und das Wachs auf den Draht aufgelötet worden ist.

0226662

Fig 1

Fig 2

Alexander KEYSSELITZ

0226662

Fig 3

Alexander KEYSSELITZ

0226662

Fig 4

Fig 5

Fig 6

Alexander KEYSSELITZ

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | GB-A-1 452 134 (INTERNATIONAL STANDARD ELECTRIC CORP.) * Figur 2 * ----- | 1 | A 01 K 47/02 |

|  | RECHERCHIERTE SACHGEBIETE (Int. Cl.4) |
|---|---|
|  | A 01 K 47/02 |

Der vorliegende Recherchenbericht wurde für alle Patentansprüche erstellt.

| Recherchenort | Abschlußdatum der Recherche | Prüfer |
|---|---|---|
| BERLIN | 28-11-1986 | SAMWEL P.N. |